# EUROPÄISCHE PATENTSCHRIFT

(11) **EP 3 406 482 B1**
(45) Veröffentlichungstag und Bekanntmachung des Hinweises auf die Patenterteilung: **26.08.2020**
(21) Anmeldenummer: 18165466.6
(22) Anmeldetag: 03.04.2018
(51) Int. Cl.: B60N 2/897, B60N 2/809, B60N 2/818

(54) **KOPFSTÜTZE UND VERFAHREN ZUR MONTAGE EINER KOPFSTÜTZE**
HEADREST AND METHOD FOR MOUNTING THE SAME
APPUIE-TÊTE ET PROCÉDÉ DE MONTAGE D'UN APPUIE-TÊTE

(30) Priorität: 10.05.2017 DE 102017004485
(43) Veröffentlichungstag der Anmeldung: 28.11.2018
(73) Patentinhaber: GRAMMER AG, 92224 Amberg (DE)
(72) Erfinder: Nuss, Ralph, 92284 Poppenricht (DE)
(74) Vertreter: Roche, von Westernhagen & Ehresmann

(56) Entgegenhaltungen:
- DE-T2- 69 928 345
- DE-T2-602006 000 827
- US-A1- 2003 222 491

## Beschreibung

Die Erfindung betrifft gemäß einem ersten Aspekt eine Kopfstütze. Eine solche Kopfstütze ist aus offenkundiger Vorbenutzung bekannt. Sie umfasst ein Kopfanlageteil, an welchem Tragstangen gehalten sind, mit denen das Kopfanlageteil an der Struktur der Rückenlehne gelagert werden kann. Ferner umfasst die Kopfstütze rückenlehnenfeste Führungshülsen aus Kunststoff, in welche die Tragstangen eingesteckt und mit diesen lösbar verriegelt sind. Eine Höhenverstellung findet z.B. durch eine Relativbewegung zwischen dem Kopfanlageteil und den Tragstangen oder zwischen den Tragstangen und den Führungshülsen statt.

Die aus dem Stand der Technik bekannte Tragstange wurde montiert, indem die Führungshülse in einen Sitz an der Rückenlehne bewegt und dort verriegelt wurde. Die Verriegelung erfolgte z.B. durch Rastelemente der Führungshülse, die sich in Eingriff mit der Lehnenstruktur bewegten, wenn die Führungshülse in ihrem Sitz angeordnet war. Danach wurden die Tragstangen in den Führungshülsen montiert. Die Tragstangen verhinderten, dass die Riegelelemente der Führungshülsen sich in den Innenraum der Führungshülse außer Eingriff mit der Struktur der Rückenlehne bewegen konnten.

Aus der DE 699 28 345 T2 ist eine Tragstruktur für eine Kopfstütze bekannt. Die Tragstruktur umfasst eine an der Rückenlehne befestigte Halterung, die aus Metall hergestellt ist. Darüber hinaus umfasst die Tragstruktur eine Hülse 11, welche in die Halterung eingesteckt wird und mittels zwei gegenüberliegenden Riegeln 18 mit einer unteren Kante der Halterung 1 verriegelt wird. Eine Tragstange der Kopfstütze kann zur Lagerung an der Rückenlehne in eine Öffnung der Hülse eingeführt werden.

Viele Komponenten des Fahrzeugs, wie z.B. die Kopfstützen, werden heute nicht immer von den Automobilherstellern selbst, sondern von Zulieferfirmen produziert und anschließend zur Montage an den Automobilhersteller geliefert.

Die Aufgabe der Erfindung besteht darin eine Vorrichtung zu schaffen, mit welcher die Montage der Kopfstütze an der Rückenlehne eines Fahrzeugsitzes einfacher durchführbar ist.

Die Aufgabe wurde gelöst durch eine Kopfstütze mit den Merkmalen des Anspruchs 1.

Die erfindungsgemäße Kopfstützenvorrichtung umfasst ein Kopfanlageteil an welchem wenigstens eine Tragstange unbewegbar oder relativbeweglich zu dem Kopfanlageteil gehalten ist. Mit der Tragstange ist das Kopfanlageteil an der Rückenlehne eines Fahrzeugsitzes lagerbar. Ferner umfasst die Kopfstützenvorrichtung eine Lagerhülse in welcher die Tragstange gelagert ist. Die Lagerhülse ist an der Struktur der Rückenlehne (nachfolgend Lehnenstruktur genannt) befestigbar.

Die Lagerhülse weist ein Riegelelement auf, welches zwischen einer Riegelposition, in welcher das Riegelelement über eine Außenfläche der Lagerhülse hinaus vorsteht und mit der Lehnenstruktur in Eingriff ist, und einer Montageposition bewegbar ist, in welcher das Riegelelement in Bezug auf die Riegelposition weniger über eine Außenfläche der Führungshülse vorragt. In der Montageposition überragt z.B. das Riegelelement die Außenfläche der Lagerhülse nicht oder lediglich geringfügig. Die Lagerhülse kann dann in einen Lagerssitz der Lehnenstruktur bewegt werden. In der Riegelposition ist die Lagerhülse fest mit der Lehnenstruktur verbunden.

Die Kopfstütze kann ohne Höhenverstellung ausgebildet sein. In diesem Fall kann weder die Tragstange relativ zu der Rückenlehne, noch das Kopfanlageteil relativ zu der Tragstange bewegt werden. Gemäß einer alternativen Ausführung ist die Kopfstütze mit einer Höhenverstellung versehen, wobei das Kopfanlageteil relativ zu der Tragstange bewegbar ist. Gemäß einer anderen Ausführung ist die Kopfstütze mit einer Höhenverstellung versehen, wobei die Tragstange relativ zu der Lagerhülse bewegbar ist.

Die erfindungsgemäße Kopfstütze ist derart ausgebildet, dass die Führungshülse während der Montage auf die Tragstange aufgeschoben werden kann und die Kopfstütze, d.h. Kopfanlageteil mit Tragstangen und Führungshülsen gemeinsam, an der Struktur der Rückenlehne montiert werden kann.

Die Tragstangen weisen eine Aussparung auf, in welche das Riegelelement der Führungshülse in der Montageposition zurückweichen kann, wenn die Führungshülse in den Sitz der Rückenlehnenstruktur bewegt wird. Die Begriffe Aussparung und Ausnehmung bezeichnen im Sinne der Erfindung sowohl einen Materialabtrag, als auch eine durch Materialverformung hergestellte Einsenkung. Die Begriffe können darüber hinaus sowohl Öffnungen, als auch geschlossene Vertiefungen bezeichnen.

Das Riegelelement ist z.B. durch eine Relativbewegung zwischen der Tragstange und der Lagerhülse von der Tragstange aus der Montageposition in die Riegelposition bewegbar. D. h., dass das Riegelelement von einer auf die Tragstange oder auf die Lagerhülse wirkenden Kraft in die Riegelposition bewegt werden kann.

Z.B. weist das Riegelelement eine Kontaktfläche auf, die in der Montageposition schräg zu einer Bewegungsbahn der Tragstange angeordnet ist, so dass bei dem Kontakt zwischen Tragstange und Riegelelement eine in axialer Richtung der Tragstange wirkende Kraft auf das Riegelelement übertragbar und in eine radiale Kraft umlenkbar ist, um das Riegelelement in die Riegelposition zu bewegen.

Gemäß einer alternativen Ausführungsform wird das Riegelelement z.B. von einem gesonderten Stellelement zwischen der Montageposition und der Riegelposition verstellt.

Das Riegelelement umfasst z.B. eine Riegelfläche, die in der Riegelposition mit einer Gegenfläche der Lehnenstruktur zusammenwirkt und eine Bewegung der Lagerhülse in Demontagerichtung der Lagerhülse verhindert. Wenn das Riegelelement - z.B. aufgrund einer Relativbewegung zwischen der Tragstange und der Lagerhülse - in die Riegelposition bewegt wird, wird die Riegelfläche derart relativ zu der Gegenfläche angeordnet, dass das Zusammenwirken von Riegelfläche und Gegenfläche eine Relativbewegung zwischen Lagerhülse und Lehnenstruktur in wenigstens eine Richtung verhindert.

Das Riegelelement ist z.B. einstückig mit der Lagerhülse ausgebildet. Es kann z.B. derart an der Lagerhülse angeformt sein, dass es bewegbar ist. Z.B. kann zwischen dem Riegelelement und der Lagerhülse ein Filmscharnier ausgebildet sein. Filmscharnier bedeutet z.B., dass das Material an dieser Stelle eine geringere Dicke aufweist, die eine Bewegbarkeit lediglich an dieser Stelle ermöglicht.

Das Riegelelement ist z.B. in die Montageposition oder in die Riegelposition rückstellbelastet. Die Rückstellung kann von einer separaten Feder oder von der elastischen Rückstellkraft des Materials vorgenommen werden. Wenn das Riegelelement in die Riegelposition belastet ist, bewegt es sich z.B. nicht selbständig in die Montageposition zurück. D.h. nach der Montage der Lagerhülse befindet sich das Riegelelement in der Riegelposition und kann die Bewegbarkeit der Tragstange in der Lagerhülse nicht beeinträchtigen.

Zusammenwirkende Formschlussmittel, die an der Tragstange und an dem Riegelelement ausgebildet sind, verhindern z.B. lösbar ein ungewolltes Bewegen des Riegels von der Montageposition in die Riegelposition.

Die Lagerhülse umfasst z.B. ein Arretierelement, welches mit einem Gegenelement der Tragstange in Eingriff bringbar ist, um eine axiale Relativbewegung zwischen Lagerhülse und Tragstange in wenigstens eine Richtung zu verhindern. Das Arretierelement wirkt z.B. in herkömmlicher Weise mit einer Rastkerbe zusammen. In einer Arretierposition steht das Arretierelement in Eingriff mit der Rastkerbe und verhindert z.B. eine Bewegung der Tragstange relativ zu der Lagerhülse in wenigstens eine Bewegungsrichtung, z.B. in zwei entgegengesetzte Bewegungsrichtungen. Das Arretierelement ist z.B. in eine Löseposition bewegbar, in welcher die Tragstange relativ zu der Lagerhülse verlagerbar ist.

Z.B. kann in wenigstens einer ersten Relativposition zwischen Lagerhülse und Tragstange das Riegelelement in der Montageposition angeordnet werden, wobei in wenigstens einer zweiten Relativposition die Tragstange eine Bewegung des Riegelelements aus der Riegelposition in die Montageposition verhindert. Auf diese Weise kann die Baugruppe umfassend das Kopfanlageteil, die Tragstangen und die auf den Tragstangen montierten Lagerhülsen in den Montagesitzen der Lehnenstruktur montiert werden. Durch eine darauf folgende Bewegung von der ersten Relativposition in die zweite Relativposition wird z.B. verhindert, dass sich das Riegelelement zurück in die Montageposition bewegt. Bei der Bewegung von der ersten Relativposition in die zweite Relativposition wird z.B. das Riegelelement von der Montageposition in die Riegelposition bewegt. In der zweiten Relativposition verhindert z.B. eine Wand der Tragstange die Rückbewegung des Riegelelements in die Montageposition.

Z.B. ist in der zweiten Relativposition das Arretierelement derart zu dem Gegenelement angeordnet, dass es in die Arretierposition bewegbar ist.

Die Erfindung betrifft außerdem ein Verfahren zur Montage einer Kopfstütze.

Ein solches Verfahren ist aus offenkundiger Vorbenutzung bekannt. Es wird Bezug genommen auf den zu dem ersten Erfindungsaspekt beschriebenen Stand der Technik.

Es war Aufgabe der Erfindung ein Verfahren zu schaffen, mit welchem die Montage der Kopfstütze vereinfacht werden kann.

Die Aufgabe wurde gelöst durch ein Verfahren zur Montage einer Kopfstütze mit den Merkmalen des Anspruchs 7.

Bei dem Verfahren wird ein Kopfanlageteil verwendet, an welchem zur Lagerung an einer Lehnenstruktur eines Fahrzeugsitzes wenigstens eine Tragstange relativbeweglich oder unbewegbar befestigt ist. Auf die Tragstange wird jeweils eine Lagerhülse aufgesteckt, z.B. derart, dass ein in der Montageposition angeordnetes Riegelelement in eine Aussparung der Tragstange hineinragt und auf diese Weise nicht über eine Außenfläche der Tragstange vorragt. Die so vormontierte Baugruppe kann dann zur Montage an dem Fahrzeugsitz geliefert werden. Anschließend wird die Lagerhülse samt dem Kopfanlageteil und der daran befestigten Tragstange in einem Montagesitz der Lehnenstruktur angeordnet. Danach wird das Riegelelement aus der Montageposition in die Riegelposition bewegt, in welcher eine Relativbewegung zwischen der Lagerhülse und der Sitzstruktur zumindest in Demontagerichtung verriegelt ist.

Z.B. wird die Tragstange nach der Anordnung der Lagerhülse in dem Montagesitz von einer ersten Relativposition in eine zweite Relativposition bewegt. Durch diese Relativbewegung kann das Riegelelement aus der Montageposition in die Riegelposition bewegt werden. Gemäß einer Alternative kann aber auch eine Rückstellkraft die Bewegung in die Riegelposition bewirken. Das kann z.B. auch die elastische Rückstellkraft des Materials sein, insbesondere da z.B. die Bewegung von der Montageposition in die Riegelposition in der Regel lediglich einmal, allenfalls wenige Male, stattfindet.

Alternativ oder zusätzlich kann die Relativbewegung bewirken, dass das Riegelelement in der Riegelposition gesichert wird. Die Sicherung kann z.B. dadurch erfolgen, dass die Tragstangenaußenfläche eine Bewegung des Riegelelements aus der Riegelposition in die Montageposition verhindert.

Alternativ oder zusätzlich kann die Relativbewegung bewirken, dass in der zweiten Relativposition das Arretierelement der Lagerhülse von einer Löseposition in eine Arretierposition bewegbar ist, wobei in der Löseposition eine Bewegung der Tragstange relativ zu der Lagerhülse möglich ist und in der Arretierposition das Arretierelement in ein Gegenelement der Tragstange eingreift und somit eine Relativbewegung der Tragstange in Bezug auf die Lagerhülse in wenigstens eine Richtung, insbesondere in zwei Richtungen, verriegelt.

Weitere Vorteile der Erfindung ergeben sich anhand eines in den Fig. schematisch dargestellten Ausführungsbeispiels. Es zeigen:
Fig. 1 eine Frontdarstellung der Rückenlehne eines Fahrzeugsitzes mit daran gelagerter Kopfstütze,
Fig. 2 eine Schnittdarstellung einer Tragstange der Kopfstütze mit darauf montierter Lagerhülse, wobei ein Riegelelement der Lagerhülse in einer Montageposition angeordnet ist,
Fig. 3 eine Schnittdarstellung der Baugruppe gemäß Fig. 2, wobei die Tragstange mit der Lagerhülse in einen Montagesitz einer Lehnenstruktur hineinbewegt wird,
Fig. 4 die Schnittdarstellung in Anlehnung an Fig. 3, wobei die Lagerhülse in dem Montagesitz angeordnet ist,
Fig. 5 die Schnittdarstellung in Anlehnung an Fig. 4, wobei das Riegelelement in einer Riegelposition in Eingriff mit einer Gegenfläche der Lehnenstruktur steht und wobei ein Arretierelement der Lagerhülse in einer Arretierposition in Eingriff mit einem Gegenelement der Tragstange angeordnet ist,
Fig. 6 die Schnittdarstellung in Anlehnung an Fig. 5 gemäß einem anderen Ausführungsbeispiel, wobei das Gegenelement derart ausgebildet ist, dass eine Bewegung der Tragstange in eine erste Richtung verhindert wird, in eine zweite, entgegengesetzte Richtung aber möglich ist.

In den Fig. ist eine Kopfstützenvorrichtung insgesamt mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

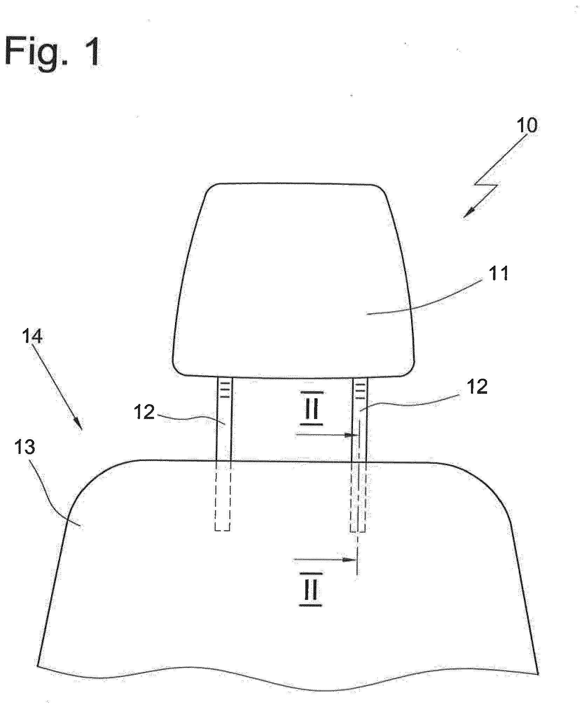

Die Kopfstütze 10 umfasst gemäß Fig. 1 ein Kopfanlageteil 11, welches mittels Tragstangen 12 an der Struktur einer lediglich teilweise dargestellten Rückenlehne 13 eines Fahrzeugsitzes 14 gelagert ist. Die Tragstangen 12 sind im vorliegenden Ausführungsbeispiel als Rohr mit einer Mittelachse m ausgebildet, sie können aber gemäß einer alternativen Ausführung auch aus Vollmaterial hergestellt sein. Anstelle von Einzeltragstangen kann alternativ auch ein Tragstangenbügel verwendet werden. In diesem Fall sind die Tragstangen 12 als freie Enden des Tragstangenbügels zu verstehen.

Zur Halterung der Tragstangen 12 an einer Stuktur der Rückenlehne 13 werden Lagerhülsen 15 verwendet, die üblicherweise aus Kunststoff gefertigt sind. Die Lagerhülsen 15 sind in Fig. 1 nicht dargestellt. Die Lagerhülsen 15 verhindern Geräusche zwischen der in der Regel metallischen Lehnenstruktur und der aus Metall hergestellten Tragstange 12. Darüber hinaus können mit der Lagerhülse 15 Passungsungenauigkeiten ausgeglichen werden.

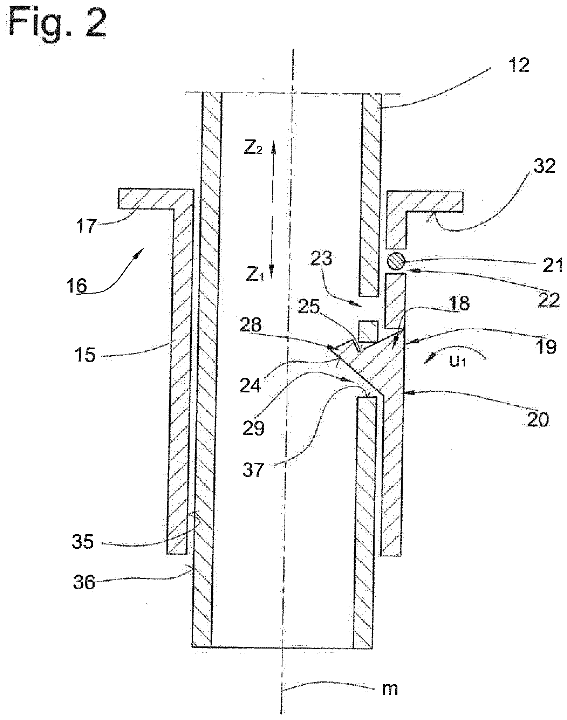

Die Lagerhülse 15 weist eine Innenfläche 35 auf, die - entgegen der Darstellung in den Fig. 2 bis 5 - mit einer Außenfläche 36 der Tragstange 12 in Kontakt steht. Im vorliegenden Ausführungsbeispiel steht die Tragstange 12 unmittelbar mit der Innenfläche 35 der Lagerhülse 15 in Kontakt. Gemäß einer Alternative kann die Innenfläche 35 aber auch Vorsprünge oder / und Rippen oder / und elastische Arme ausbilden, die mit der Tragstange 12 in Kontakt stehen. Die Erfindung ist unabhängig von der Art und Weise der Lagerung und Führung der Tragstange 12 an der Lagerhülse 15. Auch auf die Form der Tragstange 12 kommt es bei der Erfindung nicht an. Die Lagerhülse 15 kann z.B. im Querschnitt kreisförmig oder auch eckig sein.

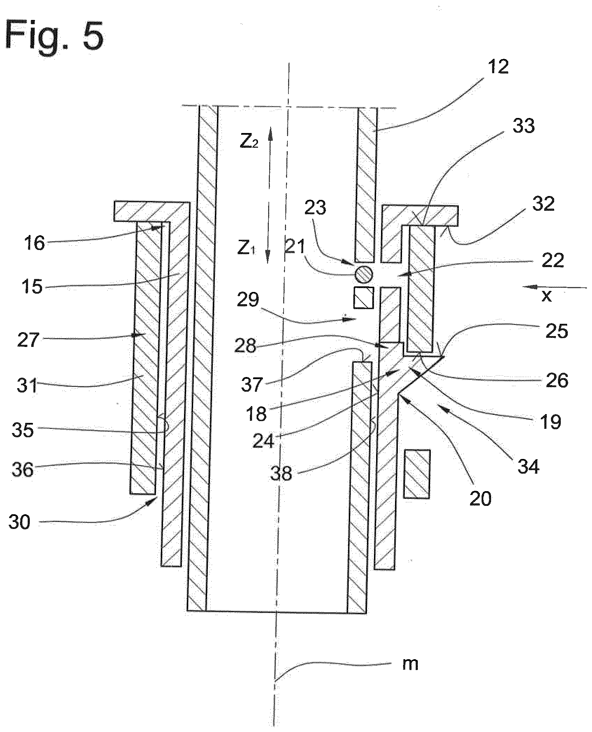

An einem Endbereich 16 ist die Lagerhülse 15 mit einem Ringsteg 17 versehen, der radial nach außen über die Lagerhülse 15 vorragt. Aus der Wand der Lagerhülse 15 ist ein Riegelelement 18 derart abgeteilt, dass ein freier Endbereich 19 ausgebildet ist. Die Verbindungstelle zwischen dem Endbereich 19 und der Lagerhülse 15 ist z.B. als Filmscharniergelenk 20 ausgebildet, d.h. das Material der Wand der Lagerhülse 15 ist an dieser Stelle von einer Dicke, dass eine Bewegung des Riegelelements 18 zwischen einer in Fig. 2 dargestellten Montageposition und einer in Fig. 5 dargestellten Riegelposition möglich ist. Im vorliegenden Ausführungsbeispiel ist das Riegelelement 18 in die Richtungen u1 und u2 zwischen der Montageposition und der Riegelposition schwenkbar.

Das Riegelelement 18 umfasst eine Kontaktfläche 24, die in der Montageposition mit einer Bewegungsrichtung z2 der Tragstange 12 einen spitzen Winkel bildet. Auf diese Weise kann ein Bereich der Tragstange 12 bei einer Bewegung der Tragstange 12 relativ zu der Lagerhülse 15 in Richtung z2 eine Kraft auf das Riegelelement 18 ausüben, welche das Riegelelement in die Riegelposition bewegt.

Das erste Riegelelement umfasst des Weiteren eine Riegelfläche 25, die in der Riegelposition gemäß Fig. 5 mit einer Gegenfläche 26 einer Lehnenstruktur 27 zusammenwirkt, um eine Bewegung der Lagerhülse 15 in Richtung x2 aus dem Montagesitz durch eine Verriegelung zu verhindern.

Ein Vorsprung 28 des Riegelelements 18 wirkt in der Montageposition formschlüssig mit der Tragstange 12 zusammen und verhindert eine unbeabsichtigte Bewegung aus der Montageposition heraus, z.B. in die Riegelposition. Der Vorsprung 28 ist bei Überschreitung einer Schwellenkraft auf die Kontaktfläche 24 elastisch verformbar, so dass sich das Riegelelement 18 aus der Montageposition in die Riegelposition bewegen lässt. In der Montageposition verhindert das Riegelelement 18 außerdem, dass sich die Lagerhülse 15 aus einer definierten Relativposition zu der Tragstange 12 herausbewegt.

Außerdem umfasst die Lagerhülse 15 ein Arretierelement 21. Das Arretierelement 21 ist an der Lagerhülse 15 befestigt. Das Arretierelement 21 ist zwischen einer Löseposition und einer Arretierposition bewegbar und von seiner elastischen Rückstellkraft in die Arretierposition belastet. Gemäß einer Alternative könnte auch eine separate Feder das Arretierelement 21 in die Arretierposition belasten. In der Löseposition, gemäß Fig. 2, kann das Arretierelement 21 z.B. in einer Aussparung 22 der Lagerhülse 15 angeordnet sein. Entgegen der Darstellung in Fig. 2 kann die Aussparung 22 anstelle eines Durchbruchs in der Wand der Lagerhülse 15 auch ein bloßer Rücksprung, also eine Vertiefung in der Wand der Lagerhülse 15 sein.

In der Arretierposition (siehe Fig. 5) ist das Arretierelement 21 in Eingriff mit einer Ausnehmung 23 der Tragstange 12. Die Ausnehmung 23 kann ebenfalls entgegen der Darstellung in Fig. 2 anstelle eines Durchbruchs eine bloße Vertiefung in der Oberfläche der Tragstange 12 sein, die z.B. durch eine Einprägung in der Wand der Tragstange 12 hergestellt wird. In der Arretierposition ist die Tragstange 12 bei dem vorliegenden Ausführungsbeispiel gemäß Fig. 5 in beide Richtungen z1 und z2 relativ zu der Lagerhülse 15 unbewegbar. In der Löseposition kann die Tragstange 12 relativ zu der Lagerhülse 15 in die Richtungen z1 und z2 bewegt werden, wenn sich das Riegelelement 18 in der Riegelposition befindet.

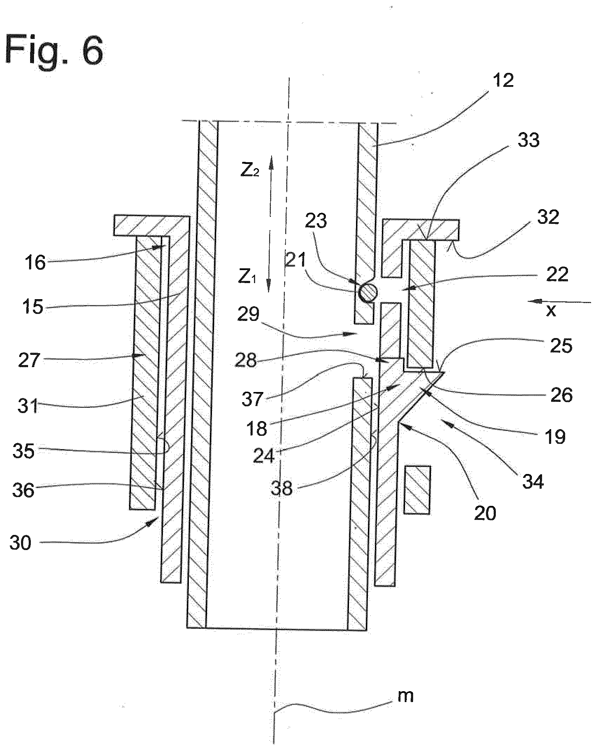

Nach einem alternativen Ausführungsbeispiel gemäß Fig. 6 könnte, z.B. wenn eine Höhenverstellvorrichtung eine Relativbewegbarkeit zwischen der Tragstange 12 und der Lagerhülse 15 vorsieht, die Ausnehmung 23 auch derart mit einer quer zu der Bewegungsrichtung z2 geformten Kante und einer schräg zu der Bewegungsrichtung z1 geformten Rampe ausgebildet sein, dass die Tragstange 12 in der Arrtierposition lediglich in Richtung z2 relativ zu der Lagerhülse 15 unbewegbar, in Richtung z1 jedoch bewegbar ist. Ansonsten entspricht das Ausführungsbeispiel gemäß Fig. 6 dem ersten Ausführungsbeispiel gemäß der Fig. 1 bis 5

In der Tragstange 12 ist - zum Eingriff des ersten Riegelelementes in der Montageposition - eine Aussparung 29 vorgesehen. Auch die Aussparung 29 kann entgegen der Darstellung in Fig. 2 anstelle eines Durchbruchs eine bloße Vertiefung in der Oberfläche der Tragstange 12 sein, die z.B. durch eine Einprägung in der Wand der Tragstange 12 hergestellt wurde. Aufgrund der Aussparung 29 kann sich das Riegelelement 18 in die Montageposition bewegen. Darüber hinaus besteht in der Montageposition aufgrund des Eingriffes des Riegelelements 18 in die Aussparung 29 eine formschlüssige Verbindung zwischen der Tragstange 12 und der Lagerhülse 15, die verhindert, dass sich die Lagerhülse 12 - z.B. während des Transports der Kopfstütze 10 - aus ihrer Relativposition zu der Tragstange 12 bewegt.

Das Montageverfahren kann folgendermaßen durchgeführt werden.

Das fertig hergestellte Kopfanlageteil 11 mit den daran befestigten Tragstangen 12 wird bereitgestellt und auf jede Tragstange 12 wird eine Lagerhülse 15 aufgesteckt und in die erste Relativposition zu der Tragstange 12 gebracht. Bei Verwendung eines Tragstangenbügels ist jedes freies Ende eine Tragstange 12 im Sinne dieser Anmeldung. Das Riegelelement 18 wird in die Montageposition, d.h. in Eingriff mit der Aussparung 29 bewegt, wobei der Vorsprung 28 formschlüssig mit einer Struktur der Tragstange 12 in Eingriff ist (siehe Fig. 2). Im vorliegenden Ausführungsbeispiel ist der Vorsprung 28 mit einer Laibung 37 der Aussparung 29 in Eingriff.

Die auf diese Weise vormontierte Kopfstütze 10 kann dann verpackt und an das Montageband des Automobilherstellers geliefert werden.

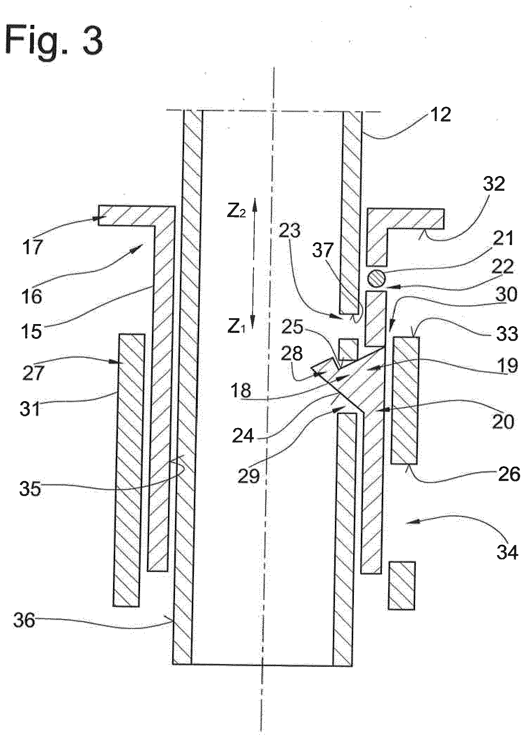

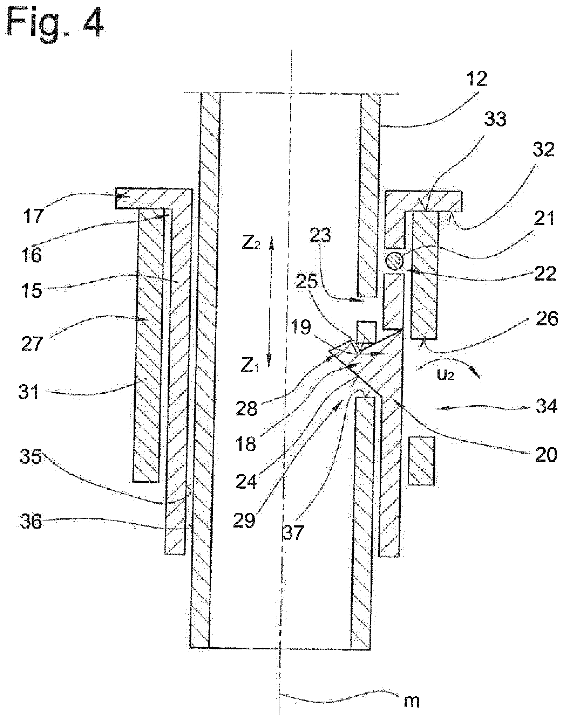

Die Struktur 27 der Rückenlehne 13 des Fahrzeugsitzes 14 ist mit Montagesitzen 30 versehen. Jeder Montagesitz 30 wird im vorliegenden Ausführungsbeispiel von einer Hülse 31 gebildet, z.B. einer im Querschnitt kreiszylindrischen Hülse, die an der Struktur 27 befestigt ist, z.B. durch einen Schweißvorgang. Die Tragstangen 12 mit den darauf montierten Lagerhülsen 15 werden in Richtung z1 in den Montagesitz 30 bewegt (siehe Fig. 3), bis jede Lagerhülse 15 in einem Montagesitz 30 angeordnet ist (siehe Fig. 4). Die Lagerhülse 15 ist in dem Montagesitz 30 angeordnet, wenn eine Unterfläche 32 des Ringstegs 17 auf einer Stirnfläche 33 des der Hülsenstruktur 31 aufliegt.

Die Hülsenstruktur 31 umfasst eine Aussparung 34, die der Aussparung 29 der Tragstange 12 etwa gegenüberliegend angeordnet ist, wenn sich die Tragstange 12 in der ersten Relativposition und die Lagerhülse 15 in dem Montagesitz 30 befindet. Indem die Tragstange 12 anschließend relativ zu der Lagerhülse 15 in Richtung z2 bewegt wird, hat das Zusammenwirken der Wand der Tragstange 12 mit der Kontaktfläche 24 zur Folge, dass sich der Vorsprung 28 aus dem Eingriff mit der Gegenstruktur der Tragstange 12 bewegt und das Riegelelement 18 in die Riegelposition gemäß Fig. 5 bewegt wird. Z.B. steht eine Laibung 37 der Aussparung 29 mit der Kontaktfläche 24 in Kontakt und bewegt das Riegelelement 18.

In Fig. 5 ist die Tragstange 12 relativ zu der Lagerhülse 15 in der zweiten Relativposition angeordnet und das Riegelelement 18 ist in der Riegelposition angeordnet. In der Riegelposition gemäß Fig. 5 ist die Riegelfläche 25 derart zu der Gegenfläche 26 positioniert, dass eine Bewegung der Lagerhülse 15 in Richtung z2 verriegelt ist. Das Zusammenwirken der Unterfläche 32 der Lagerhülse 15 mit der Stirnfläche 33 der Lehnenstruktur 27 verhindert eine Bewegung der Lagerhülse 15 in Richtung z1. Ein Bereich 38 der Außenfläche 36 der Tragstange 12 verhindert eine Rückbewegung des Riegelelements 18 in die Montageposition. Außerdem ist die Ausnehmung 23 derart zu dem Arretierelement 21 angeordnet, dass es sich in Richtung x in Eingriff mit der Aussparung 23 bewegen kann, so dass eine Bewegung der Tragstange 12 in die Richtungen z1 und z2 relativ zu der Lagerhülse 15 verriegelt ist. Z.B. ist das Arretierelement 21 in Richtung x in Eingriff mit der Aussparung 23 belastet. Die Kopfstütze 10 ist damit fertig montiert und fest an der Struktur 27 der Rückenlehne 13 gehalten.

## Patentansprüche

1. Kopfstütze (10) mit einem Kopfanlageteil (11) an welchem wenigstens eine Tragstange (12) zur Lagerung an der Rückenlehne (13) eines Fahrzeugsitzes (14) unbewegbar oder relativbeweglich zu dem Kopfanlageteil (11) gehalten ist, mit einer Lagerhülse (15), in welcher die Tragstange (12) gelagert ist, wobei die Lagerhülse (15) zu ihrer Verriegelung an einer Struktur (27) des Fahrzeugsitzes (14) ein Riegelelement (18) aufweist, welches zwischen einer Riegelposition, in welcher das Riegelelement (18) über eine Außenfläche (36) der Lagerhülse (15) vorragt und einer Montageposition bewegbar ist, in welcher es bezüglich der Riegelposition weniger über eine Außenfläche (36) der Lagerhülse (15) vorragt, **dadurch gekennzeichnet, dass** die Tragstange (12) eine Aussparung (29) umfasst, in welche das Riegelelement (18) sich in der Montageposition hineinbewegen kann.

2. Kopfstütze nach Anspruch 1, **dadurch gekennzeichnet, dass** das Riegelelement (18) eine Kontaktfläche (24) aufweist, die mit einer Fläche der Tragstange (12) zusammenwirkt, wobei das Riegelelement (18) durch eine Relativbewegung zwischen der Tragstange (12) und der Lagerhülse (15) von der Tragstange (12) in die Riegelposition bewegbar ist.

3. Kopfstütze nach Anspruch 2, **dadurch gekennzeichnet, dass** die Kontaktfläche (24) in der Montageposition schräg zu einer Bewegungsrichtung (z2) der Tragstange (12) angeordnet ist, so dass bei dem Kontakt zwischen Tragstange (12) und Riegelelement (18) eine in axialer Richtung der Tragstange (12) wirkende Kraft auf das Riegelelement (18) übertragbar und in eine radiale Kraft umlenkbar ist, um das Riegelelement (18) in die Riegelposition zu bewegen.

4. Kopfstütze nach einem der vorangehenden Ansprüche, **dadurch gekennzeichnet, dass** das Riegelelement (18) eine Riegelfläche (25) umfasst, die in der Riegelposition mit einer Gegenfläche (26) der Lehnenstruktur (27) zusammenwirken kann und eine Bewegung der Lagerhülse (15) in Demontagerichtung (z2) der Lagerhülse (15) verhindert.

5. Kopfstütze nach einem der vorangehenden Ansprüche, **dadurch gekennzeichnet, dass** in wenigstens einer ersten Relativposition zwischen Lagerhülse (15) und Tragstange (12) das Riegelelement (18) in der Montageposition angeordnet werden kann und dass in wenigstens einer zweiten Relativposition die Tragstange (12) eine Bewegung aus der Riegelposition in die Montageposition verhindert.

6. Kopfstütze nach einem der vorangehenden Ansprüche, **dadurch gekennzeichnet, dass** die Lagerhülse (15) ein Arretierelement (21) umfasst, welches mit einer Ausnehmung (23) der Tragstange (12) in Eingriff bringbar ist, um eine axiale Relativbewegung zwischen Lagerhülse (15) und Tragstange (12) in wenigstens eine Richtung (z2) zu verhindern.

7. Verfahren zur Montage einer Kopfstütze (10) an der Struktur (27) einer Rückenlehne (13) eines Fahrzeugsitzes (14), umfassend die Schritte
Aufstecken einer Lagerhülse (15) auf wenigstens eine Tragstange (12) in eine erste Relativposition, derart, dass ein Riegelelement (18) der Lagerhülse (15) in einer Montageposition angeordnet wird, in welcher das Riegelelement (18) in eine Aussparung (29) der Tragstange (12) hineinragt und eine Riegelfläche (25) des Riegelelements (18) in Bezug auf eine Riegelposition weniger über eine Außenfläche (36) der Lagerhülse (15) vorragt,
Einstecken der Lagerhülse (15) samt des Kopfanlageteils (11) und der daran befestigten Tragstange (12) in einen Montagesitz (30) der Struktur (27),
Bewegen des Riegelelements (18) aus der Montageposition in die Riegelposition, in welcher das Riegelelement (18) über eine Außenfläche (36) der Lagerhülse (15) vorragt und eine Riegelfläche (25) des Riegelelements (18) mit einer Gegenfläche (26) der Struktur (27) verriegelnd zusammenwirkt.

8. Verfahren nach Anspruch 7, **gekennzeichnet durch** eine Relativbewegung zwischen der Tragstange (12) und der Lagerhülse (15) von einer ersten Relativposition in eine zweite Relativposition.

9. Verfahren nach Anspruch 8, **dadurch gekennzeichnet, dass** das Riegelelement während der Bewegung zwischen der ersten Relativposition und der zweiten Relativposition von der Tragstange (12) in die Riegelposition bewegt wird.

10. Verfahren nach Anspruch 8 oder 9, **dadurch gekennzeichnet, dass** in der zweiten Relativposition ein Arretierelement (21) der Lagerhülse (15) in Eingriff mit einer Ausnehmung (23) der Tragstange (12) bewegt wird, um eine axiale Bewegung der Tragstange (12) relativ zu der Lagerhülse (15) zu verhindern.

## Claims

1. Headrest (10) having a head contact part (11), on which at least one support rod (12) for mounting on the backrest (13) of a vehicle seat (14) is held in such a way as to be immovable or movable relative to the head contact part (11), and having a bearing sleeve (15) in which the support rod (12) is mounted, wherein the bearing sleeve (15) has a latching element (18) for latching it to a structure (27) of the vehicle seat (14), said latching element being movable between a latching position, in which the latching element (18) projects beyond an outer surface (36) of the bearing sleeve (15), and a mounting position, in which it projects beyond an outer surface (36) of the bearing sleeve (15) to a lesser extent than in the latching position, **characterized in that** the support rod (12) comprises a cutout (29), into which the latching element (18) can move in the mounting position.

2. Headrest according to claim 1, **characterized in that** the latching element (18) has a contact surface (24) which cooperates with a surface of the support rod (12), wherein the latching element (18) can be moved into the latching position by the support rod (12) by a relative movement between the support rod (12) and the bearing sleeve (15).

3. Headrest according to claim 2, **characterized in that** the contact surface (24) in the mounting position is arranged at an angle to a direction of movement (z2) of the support rod (12) so that, when the support rod (12) and the latching element (18) come into contact, a force acting in the axial direction of the support rod (12) can be transmitted to the latching element (18) and diverted into a radial force in order to move the latching element (18) into the latching position.

4. Headrest according to any one of the preceding claims, **characterized in that** the latching element (18) comprises a latching surface (25) which in the latching position can cooperate with a mating surface (26) of the backrest structure (27) and prevents any movement of the bearing sleeve (15) in the direction of removal (z2) of the bearing sleeve (15).

5. Headrest according to any one of the preceding claims, **characterized in that**, in at least a first relative position between the bearing sleeve (15) and the support rod (12), the latching element (18) can be arranged in the mounting position, and **in that**, in at least a second relative position, the support rod (12) prevents any movement from the latching position to the mounting position.

6. Headrest according to any one of the preceding claims, **characterized in that** the bearing sleeve (15) comprises an arresting element (21) which can be brought into engagement with a recess (23) of the support rod (12) in order to prevent any axial relative movement between the bearing sleeve (15) and the support rod (12) in at least one direction (z2).

7. Method for mounting a headrest (10) on the structure (27) of a backrest (13) of a vehicle seat (14), comprising the steps:
placing a bearing sleeve (15) onto at least one support rod (12) in a first relative position such that a latching element (18) of the bearing sleeve (15) is arranged in a mounting position, in which the latching element (18) projects into a cutout (29) of the support rod (12) and a latching surface (25) of the latching element (18) projects beyond an outer surface (36) of the bearing sleeve (15) to a lesser extent than in a latching position,
inserting the bearing sleeve (15) together with the head contact part (11) and the support rod (12) attached thereto into a mounting seat (30) of the structure (27),
moving the latching element (18) from the mounting position to the latching position, in which the latching element (18) projects beyond an outer surface (36) of the bearing sleeve (15) and a latching surface (25) of the latching element (18) cooperates with a mating surface (26) of the structure (27) in a latching manner.

8. Method according to claim 7, **characterized by** a relative movement between the support rod (12) and the bearing sleeve (15) from a first relative position to a second relative position.

9. Method according to claim 8, **characterized in that**, during the movement between the first relative position and the second relative position, the latching element is moved into the latching position by the support rod (12).

10. Method according to claim 8 or 9, **characterized in that**, in the second relative position, an arresting element (21) of the bearing sleeve (15) is moved into engagement with a recess (23) of the support rod (12) in order to prevent any axial movement of the support rod (12) relative to the bearing sleeve (15).

## Revendications

1. Appuie-tête (10) comprenant une partie d'appui de tête (11) sur laquelle au moins une barre de support (12) destinée à s'appuyer sur le dossier (13) d'un siège de véhicule (14) est maintenue de façon immobile ou de façon mobile par rapport à la partie d'appui de tête (11), comprenant une douille de palier (15) dans laquelle la barre de support (12) est montée, dans lequel la douille de palier (15) présente, en vue de son verrouillage sur une structure (27) du siège de véhicule (14), un élément de verrou (18) qui est déplaçable entre une position de verrouillage, dans laquelle l'élément de verrou (18) est saillant au-dessus d'une face extérieure (36) de la douille de palier (15), et une position de montage dans laquelle elle est moins saillante au-dessus d'une face extérieure (36) de la douille de palier (15) par rapport à la position de verrouillage, **caractérisé en ce que** la barre de support (12) comporte une découpe (29) dans laquelle l'élément de verrou peut s'engager dans la position de montage.

2. Appuie-tête selon la revendication 1, **caractérisé en ce que** l'élément de verrou (18) présente une face de contact (24) qui coopère avec une face de la barre de support (12), dans lequel l'élément de verrou (18) est déplaçable dans la position de verrouillage par un déplacement relatif de la barre de support (12) entre la barre de support (12) et la douille de palier (15).

3. Appuie-tête selon la revendication 2, **caractérisé en ce que** la face de contact (24) dans la position de montage est disposée en oblique par rapport à une direction de déplacement (z2) de la barre de support (12), de telle manière que, lors du contact entre la barre de support (12) et l'élément de verrou (18), une force qui agit dans la direction axiale de la barre de support (12) puisse être transmise à l'élément de verrou (18) et puisse être déviée en une force radiale, dans le but de déplacer l'élément de verrou (18) dans la position de verrouillage.

4. Appuie-tête selon l'une quelconque des revendications précédentes, **caractérisé en ce que** l'élément de verrou (18) présente une face de verrou (25) qui, dans la position de verrouillage, peut coopérer avec une face opposée (26) de la structure de dossier (27) et empêche un déplacement de la douille de palier (15) dans la direction de démontage (z2) de la douille de palier (15).

5. Appuie-tête selon l'une quelconque des revendications précédentes, **caractérisé en ce que** l'élément de verrouillage (18) dans la position de montage peut se trouver dans au moins une première position relative entre la douille de palier (15) et la barre de support (12), et **en ce que** dans au moins une seconde position relative la barre de support (12) empêche un déplacement à partir de la position de verrouillage jusque dans la position de montage.

6. Appuie-tête selon l'une quelconque des revendications précédentes, **caractérisé en ce que** la douille de palier (15) comprend un élément d'arrêt (21), qui peut être mis en prise avec un évidement (23) de la barre de support (12), dans le but d'empêcher un déplacement relatif axial entre la douille de palier (15) et la barre de support (12) dans au moins une direction (z2).

7. Procédé de montage d'un appuie-tête (10) sur la structure (27) d'un dossier (13) de siège de véhicule (14), comprenant les étapes suivantes:
engager une douille de palier (15) sur au moins une barre de support (12) dans une première position relative, de telle manière qu'un élément de verrou (18) de la douille de palier (15) soit disposé dans une position de montage dans laquelle l'élément de verrou (18) pénètre dans une découpe (29) de la barre de support (12) et une face de verrou (25) de l'élément de verrou (18) est moins saillante par rapport à une position de verrou au-dessus d'une face extérieure (36) de la douille de palier (15),
engager la douille de palier (15) en même temps que la partie d'appui de tête (11) et la barre de support (12) fixée à celle-ci dans un siège de montage (30) de la structure (27), et
déplacer l'élément de verrou (18) à partir de la position de montage jusque dans la position de verrouillage dans laquelle l'élément de verrou (18) est saillant au-dessus d'une face extérieure (36) de la douille de palier (15) et une face de verrou (25) de l'élément de verrou (18) coopère par verrouillage avec une face opposée (26) de la structure (27).

8. Procédé selon la revendication 7, **caractérisé par** un déplacement relatif entre la barre de support (12) et la douille de palier (15) à partir de la première position relative jusque dans une seconde position relative.

9. Procédé selon la revendication 8, **caractérisé en ce que** l'on déplace l'élément de verrou dans la position de verrouillage pendant le déplacement de la barre de support (12) entre la première position relative et la seconde position relative.

10. Procédé selon la revendication 8 ou 9, **caractérisé en ce que** l'on déplace dans la seconde position relative un élément d'arrêt (21) de la douille de palier (15) en prise avec un évidement (23) de la barre de support (12), dans le but d'empêcher un déplacement axial de la barre de support (12) par rapport à la douille de palier (15).
